# FASCICULE DE BREVET EUROPEEN

(11) **EP 4 237 325 B1**
(45) Date de publication et mention de la délivrance du brevet: **01.01.2025**
(21) Numéro de dépôt: 21810677.1
(22) Date de dépôt: 02.11.2021
(51) Int. Cl.: B64C 7/02, B64D 29/06, B64D 27/40

(54) **ENSEMBLE PROPULSIF D'AÉRONEF COMPRENANT UNE NACELLE ET UNE TURBOMACHINE INDÉPENDAMMENT SUPPORTÉES PAR UN ÉLÉMENT DE VOILURE OU DE FUSELAGE OU D'EMPENNAGE**
FLUGZEUGANTRIEBSEINHEIT MIT EINER VON EINEM FLÜGEL-, RUMPF- ODER HECKELEMENT UNABHÄNGIG UNTERSTÜTZTEN GONDEL UND EINER TURBOMASCHINE
AIRCRAFT PROPULSION UNIT COMPRISING A NACELLE AND A TURBOMACHINE INDEPENDENTLY SUPPORTED BY A WING, FUSELAGE OR TAIL ELEMENT

(30) Priorité: 02.11.2020 FR 2011207
(43) Date de publication de la demande: 06.09.2023
(73) Titulaire: Safran Nacelles, 76700 Gonfreville-l'Orcher (FR)
(72) Inventeur: KIOUA, Hazem, 77550 MOISSY-CRAMAYEL (FR); LEMOINE, Damien, 77550 MOISSY-CRAMAYEL (FR); REBOUL, Pierre-Alain, 77550 MOISSY-CRAMAYEL (FR); MENIELLE, Matthieu, 77550 MOISSY-CRAMAYEL (FR)
(74) Mandataire: Brevalex
(86) Numéro de dépôt international: PCT/FR2021/051917
(87) Numéro de publication internationale: WO 2022/090677

(56) Documents cités:
- EP-A2- 2 202 153
- EP-A2- 2 631 181
- FR-A1- 2 920 409
- US-A- 3 137 460
- US-A- 4 458 863

## Description

### Domaine technique

L'invention se rapporte au domaine des ensembles propulsifs pour aéronef.

### État de la technique antérieure

Un ensemble propulsif d'avion contemporain comprend généralement une turbomachine, une nacelle et un pylône ou plus généralement une structure de support permettant de relier la turbomachine à une aile ou au fuselage de l'avion.

Dans les architectures conventionnelles, la nacelle comprend une entrée d'air et une section arrière d'éjection de gaz qui sont chacune fixées à la turbomachine au moyen de brides et de boulons. Le montage en porte-à-faux de ces éléments de nacelle nécessite de dimensionner la turbomachine en conséquence, ce qui augmente sa masse et entraîne de surcroît une augmentation des charges dynamiques appliquées sur la turbomachine.

FR 2 920 409 A1 divulgue un ensemble propulsif pour aéronef, comprenant une nacelle, une structure de support et des premiers moyens de liaison configurés pour relier une turbomachine à la structure de support, la nacelle comprenant une entrée d'air et une section arrière d'éjection de gaz, tel qu'il comprend des deuxièmes moyens de liaison reliant l'entrée d'air à la structure de support de sorte que la structure de support puisse supporter d'une part la turbomachine via les premiers moyens de liaison et d'autre part l'entrée d'air via les deuxièmes moyens de liaison.

### Exposé de l'invention

Un but de l'invention est de procurer un ensemble propulsif permettant de réduire les charges appliquées sur la turbomachine.

A cet effet, l'invention a pour objet un ensemble propulsif pour aéronef, selon les caractéristiques de la revendication 1.

L'entrée d'air et/ou la section arrière de la nacelle étant supportées par la structure de support, et non pas la turbomachine, les charges appliquées sur la turbomachine sont réduites en conséquence.

Cela permet en outre de réduire la masse de la turbomachine puisqu'il n'est plus nécessaire d'équiper celle-ci de moyens de support de l'entrée d'air et/ou de la section arrière.

Dans un mode de réalisation, les deuxièmes moyens de liaison comprennent une structure de support intermédiaire fixée à la structure de support, l'entrée d'air et/ou la section arrière de la nacelle étant reliées à la structure de support intermédiaire.

Il est ainsi possible d'adapter la géométrie de la structure de support intermédiaire en fonction de la forme de la turbomachine et plus généralement de l'espace disponible au sein de l'ensemble propulsif tout en conservant une structure de support de géométrie simplifiée et/ou conventionnelle.

De préférence, la structure de support intermédiaire forme un berceau s'étendant circonférentiellement autour d'un axe central longitudinal de l'ensemble propulsif.

Un tel berceau permet tout à la fois d'améliorer le maintien de l'entrée d'air et/ou de la section arrière, d'envelopper une partie de la turbomachine et de déposer et remonter la turbomachine sans déposer le berceau.

Dans un mode de réalisation, le berceau présente une dimension circonférentielle inférieure à 180°.

Dans un autre mode de réalisation, le berceau présente une dimension circonférentielle supérieure à 180°.

Dans ce dernier cas, le berceau peut comprendre une première partie fixe et une deuxième partie démontable de manière à pouvoir déplacer la turbomachine par rapport à la première partie dans le cadre d'une opération de maintenance.

Selon une première variante de réalisation, la structure de support intermédiaire comprend un cadre avant formant un tronçon d'anneau configuré pour y fixer l'entrée d'air de la nacelle.

Selon une deuxième variante de réalisation, la structure de support intermédiaire comprend un cadre arrière formant un tronçon d'anneau configuré pour y fixer la section arrière de la nacelle.

Ces variantes peuvent être combinées de sorte que, selon une troisième variante de réalisation, la structure de support intermédiaire comprend à la fois un cadre avant formant un tronçon d'anneau configuré pour y fixer l'entrée d'air de la nacelle et un cadre arrière formant un tronçon d'anneau configuré pour y fixer la section arrière de la nacelle.

De préférence, l'entrée d'air et/ou la section arrière de la nacelle sont montées en porte-à-faux sur la structure de support intermédiaire.

Selon une caractéristique de l'invention, les deuxièmes moyens de liaison comprennent un organe d'articulation configuré pour autoriser un déplacement d'un élément de nacelle parmi l'entrée d'air et la section arrière entre :
- une position de vol, dans laquelle un axe central dudit élément de nacelle et un axe central longitudinal de l'ensemble propulsif sont confondus ou parallèles l'un par rapport à l'autre, et
- une position de maintenance, dans laquelle l'axe central dudit élément de nacelle et l'axe central longitudinal de l'ensemble propulsif sont obliques ou perpendiculaires l'un par rapport à l'autre.

Bien entendu, les caractéristiques qui précèdent peuvent s'appliquer à la fois à l'entrée d'air et à la section arrière de la nacelle ou à un seul de ces éléments de nacelle.

La position de maintenance précitée permet d'éviter le démontage de l'élément de nacelle correspondant et d'éviter pour ce faire de déposer la turbomachine afin de réaliser certaines opérations de maintenance.

Il en résulte une facilitation et une réduction moyenne de la durée et du coût des interventions de maintenance.

Dans un mode de réalisation, le déplacement dudit élément de nacelle entre la position de vol et la position de maintenance est réalisé autour d'un axe de rotation oblique ou perpendiculaire par rapport à l'axe central longitudinal de l'ensemble propulsif.

Dans un mode de réalisation, l'ensemble propulsif comprend une ou plusieurs bielles configurées pour maintenir ledit élément de nacelle en position de maintenance et pour transmettre des efforts de l'une à l'autre parmi l'élément de nacelle et la structure de support lorsque l'élément de nacelle est en position de vol.

Avantageusement, les bielles peuvent être amovibles et/ou télescopiques.

Dans un mode de réalisation, les premiers moyens de liaison traversent les deuxièmes moyens de liaison.

Cela permet de réduire l'encombrement et/ou la masse de l'ensemble propulsif et plus généralement d'améliorer son architecture.

L'invention a aussi pour objet un aéronef comprenant un ensemble propulsif tel que défini ci-dessus.

Dans un mode de réalisation, ladite structure de support forme un élément de voilure ou de fuselage ou d'empennage.

Dans un mode de réalisation, l'aéronef forme un avion supersonique.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique d'un ensemble propulsif d'aéronef ;
[Fig. 2] est une vue schématique d'un ensemble propulsif monté sous une aile d'aéronef ;
[Fig. 3] est une vue schématique de deux ensembles propulsifs montés latéralement en partie arrière d'un fuselage d'aéronef ;
[Fig. 4] est une vue schématique d'un ensemble propulsif montés en partie arrière d'un fuselage d'aéronef, sous un empennage de cet aéronef ;
[Fig. 5] est une vue schématique d'une architecture d'ensemble propulsif conforme à l'invention, l'ensemble propulsif comprenant une turbomachine et une nacelle qui sont supportées indépendamment l'une de l'autre ;
[Fig. 6] est une vue schématique d'un berceau de support de nacelle pour un ensemble propulsif présentant une architecture conforme à la figure 5 ;
[Fig. 7] est une vue schématique du berceau de la figure 6 recouvert de peaux externes ;
[Fig. 8] est une vue schématique d'une ossature d'aile d'aéronef sous laquelle sont suspendus le berceau de la figure 6 et une turbomachine conformément à l'architecture de la figure 5 ;
[Fig. 9] est une vue schématique d'un ensemble propulsif conforme à l'invention, comprenant une structure de support principale, une structure de support intermédiaire et une entrée d'air articulée sur la structure de support intermédiaire, l'entrée d'air étant dans une position de vol ;
[Fig. 10] est une vue schématique de l'ensemble propulsif de la figure 9, l'entrée d'air étant dans une position de maintenance ;
[Fig. 11] est une vue schématique d'un ensemble propulsif conforme à l'invention, comprenant une structure de support et une entrée d'air articulée sur la structure de support, l'entrée d'air étant dans une position de vol ;
[Fig. 12] est une vue schématique de l'ensemble propulsif de la figure 11, l'entrée d'air étant dans une position de maintenance ;
[Fig. 13] est une vue schématique d'un ensemble propulsif conforme à l'invention, comprenant une structure de support principale, une structure de support intermédiaire et une section arrière de nacelle articulée sur la structure de support intermédiaire, la section arrière étant dans une position de vol ;
[Fig. 14] est une vue schématique de l'ensemble propulsif de la figure 13, la section arrière étant dans une position de maintenance ;
[Fig. 15] est une vue schématique d'un ensemble propulsif conforme à l'invention, comprenant une structure de support et une section arrière de nacelle articulée sur la structure de support, la section arrière étant dans une position de vol ;
[Fig. 16] est une vue schématique de l'ensemble propulsif de la figure 15, la section arrière étant dans une position de maintenance ;
[Fig. 17] est une vue schématique d'un ensemble propulsif comprenant un élément de nacelle articulé sur une structure de support, l'élément de nacelle étant dans une position de vol, l'ensemble propulsif comprenant une bielle configurée pour assurer une fonction de renfort structural, la bielle comprenant une première extrémité articulée sur l'élément de nacelle et une deuxième extrémité reliée à la structure de support de manière détachable ;
[Fig. 18] est une vue schématique de l'ensemble propulsif de la figure 17, l'élément de nacelle étant dans une position de maintenance, la bielle étant configurée pour maintenir l'élément de nacelle en position de maintenance, la deuxième extrémité de la bielle étant reliée à une partie fixe de l'ensemble propulsif de manière détachable ;
[Fig. 19] est une vue schématique d'un ensemble propulsif comprenant un élément de nacelle articulé sur une structure de support, l'élément de nacelle étant dans une position de vol, l'ensemble propulsif comprenant une bielle configurée pour assurer une fonction de renfort structural, la bielle comprenant une première extrémité reliée à une première partie de l'élément de nacelle de manière détachable et une deuxième extrémité reliée à la structure de support de manière détachable ;
[Fig. 20] est une vue schématique de l'ensemble propulsif de la figure 19, l'élément de nacelle étant dans une position de maintenance, la bielle étant configurée pour maintenir l'élément de nacelle en position de maintenance, la première extrémité de la bielle étant reliée à une deuxième partie de l'élément de nacelle de manière détachable, la deuxième extrémité de la bielle étant reliée à ladite partie fixe de l'ensemble propulsif de manière détachable.

### Description détaillée de modes de réalisation

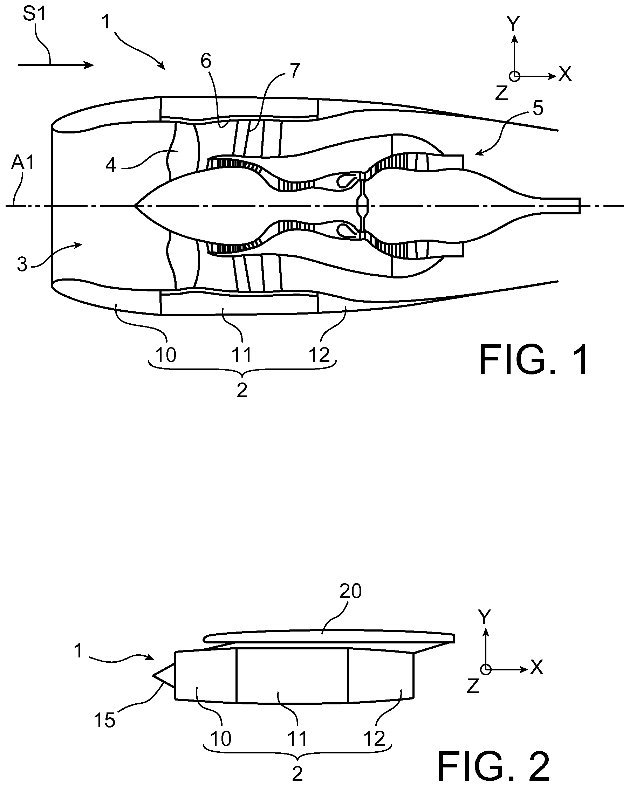

Les figures 1 à 16 comprennent un référentiel X, Y et Z définissant respectivement des directions axiale (ou longitudinale), verticale et latérale orthogonales entre elles.

Il est représenté sur la figure 1 un ensemble propulsif 1 pour aéronef, présentant un axe central longitudinal A1 parallèle à la direction axiale X.

L'ensemble propulsif 1 comprend une nacelle 2 et une turbomachine 3.

Dans cet exemple, la turbomachine 3 est un turboréacteur à double flux comprenant, de manière connue en soi, une soufflante 4, un générateur de gaz 5 et un carter externe 6 relié au générateur de gaz 5 par des bras structuraux 7.

L'axe central longitudinal A1 forme un axe de rotation d'un rotor de la turbomachine 3.

Le carter externe 6 de la turbomachine 3 s'étend axialement vers l'avant de l'ensemble propulsif 1 de manière à entourer la soufflante 4.

Dans l'ensemble de la description, les termes « avant » et « arrière » sont définis relativement à un sens S1 d'écoulement de gaz à travers l'ensemble propulsif 1 selon la direction axiale X.

De manière connue en soi, la nacelle 2 comprend, de l'avant vers l'arrière, une section avant 10 formant une entrée d'air, une section intermédiaire 11 comprenant des capots de soufflante (non représentés), et une section arrière 12 d'éjection de gaz.

Dans cet exemple, la section arrière 12 est une virole fixe. Dans un autre mode de réalisation, la section arrière 12 comprend un inverseur de poussée (non représenté).

Les figures 2 à 4 illustrent différentes configurations conventionnelles de montage d'un tel ensemble propulsif 1.

La figure 2 montre un ensemble propulsif 1 monté verticalement sous une aile 20 d'un aéronef.

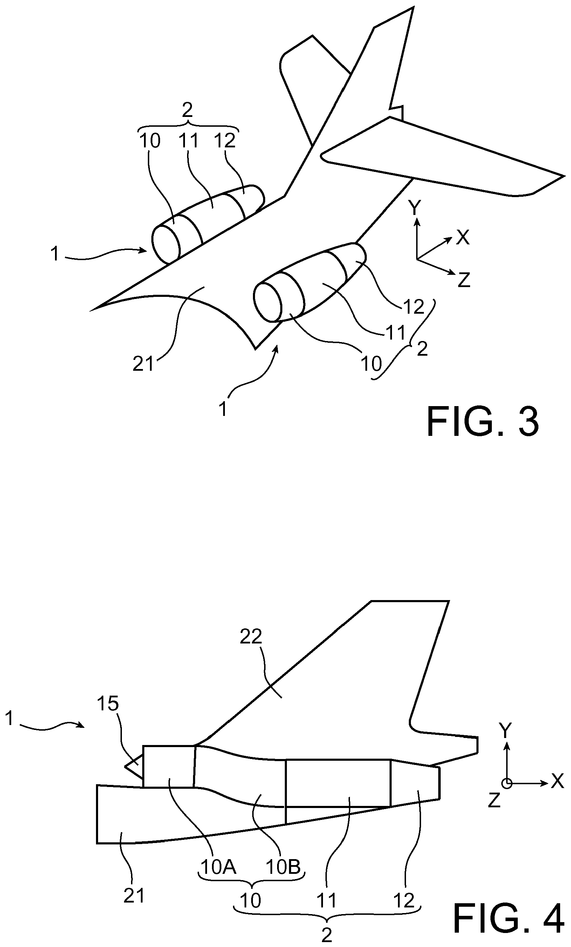

La figure 3 montre deux ensembles propulsifs 1 montés sur un fuselage 21 d'un aéronef, latéralement et en partie arrière du fuselage 21.

La figure 4 montre un ensemble propulsif 1 monté sur un fuselage 21 d'un aéronef, dans le prolongement du fuselage 21 selon la direction longitudinale X et s'étendant verticalement sous un empennage 22 de l'aéronef.

Les ensembles propulsifs 1 illustrés sur les figures 2 à 4 sont dans ces exemples similaires à celui de la figure 1.

Dans la configuration de la figure 4, l'entrée d'air 10 comprend un tronçon 10A de captation d'air et un tronçon 10B en forme de « S » reliant l'un à l'autre le tronçon 10A et la section intermédiaire 11 de la nacelle 2.

Dans chacune des configurations des figures 2 et 4, l'ensemble propulsif 1 comprend en outre un cône d'entrée 15 permettant de ralentir le flux d'air pénétrant dans l'entrée d'air 10.

L'invention se rapporte plus spécifiquement aux relations structurelles entre la nacelle 2 d'une part, la turbomachine 3 d'autre part, et une structure de support décrite plus en détails ci-dessous.

Dans la configuration de la figure 2, la structure de support forme une partie d'une ossature de l'aile 20.

Dans la configuration de la figure 3, la structure de support forme une partie du fuselage 21.

Dans la configuration de la figure 4, la structure de support forme une partie de l'empennage 22.

L'invention est applicable à chacune des configurations des figures 2 à 4 et à des variantes de ces configurations. Par exemple, l'invention peut aussi être mise en oeuvre dans un ensemble propulsif 1 dépourvu de cône d'entrée et monté selon la configuration de la figure 2 ou 4, ou encore à un ensemble propulsif 1 comportant un cône d'entrée et monté selon la configuration de la figure 3.

De plus, l'invention s'applique aussi à un ensemble propulsif dont la turbomachine est différente de celle illustrée à la figure 1. De manière non limitative, la turbomachine peut être un turboréacteur à simple ou à double flux et comprenant ou non une postcombustion.

Par convention, il est considéré dans la présente description que la structure de support appartient à l'ensemble propulsif 1.

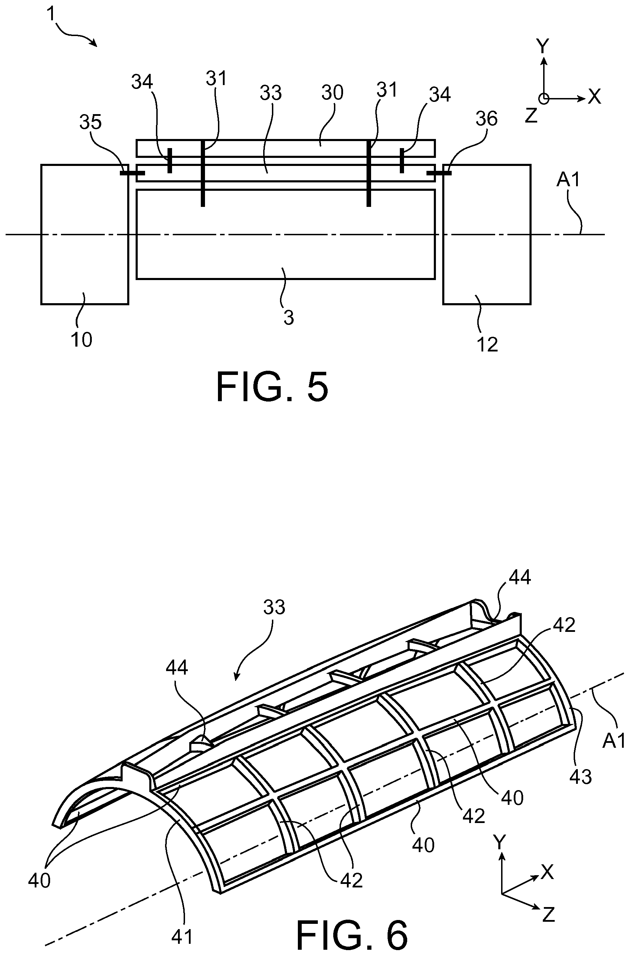

La figure 5 illustre de manière schématique une architecture d'ensemble propulsif 1 conforme à l'invention.

L'ensemble propulsif 1 de la figure 5 comprend une structure de support 30 qui forme dans cet exemple une partie d'ossature d'aile 20, selon la configuration de la figure 2.

La description qui suit s'applique par analogie à chacune des configurations des figures 3 et 4 et plus généralement à toute configuration identique ou similaire à l'une quelconque des configurations des figures 2 à 4.

En référence à la figure 5, la turbomachine 3 est reliée à la structure de support 30 par des premiers moyens de liaison 31.

Dans cet exemple, les premiers moyens de liaison 31 comprennent des bras de suspension configurés pour supporter la turbomachine 3.

L'ensemble propulsif 1 de la figure 5 comprend par ailleurs une structure de support intermédiaire 33 fixée à la structure de support 30 par des organes de fixation 34.

La structure de support intermédiaire 33 forme dans cet exemple une partie de la section intermédiaire 11 de la nacelle 2 au sens où elle s'étend axialement entre l'entrée d'air 10 et la section arrière 12 de la nacelle 2.

Dans cet exemple, l'entrée d'air 10 et la section arrière 12 sont chacune reliées à la structure de support intermédiaire 33 par des moyens de liaison 35 et 36, respectivement.

La structure de support intermédiaire 33 et les moyens de liaison 35 et 36 forment des deuxièmes moyens de liaison, distincts des premiers moyens de liaison 31.

Cette architecture permet à la structure de support 30 de supporter d'une part la turbomachine 3 via les premiers moyens de liaison 31 et d'autre part l'entrée d'air 10 et la section arrière 12 de la nacelle 2 via les deuxièmes moyens de liaison.

Autrement dit, la turbomachine 3 d'une part et l'entrée d'air 10 et la section arrière 12 de la nacelle 2 d'autre part sont supportées par la structure de support 30 de manière indépendante.

Par comparaison avec un ensemble propulsif conventionnel dans lequel l'entrée d'air et la section arrière de la nacelle sont supportées par la turbomachine, l'invention permet de réduire la masse de la turbomachine 3, celle-ci pouvant dès lors être dépourvue de brides de fixation de l'entrée d'air 10 et de la section arrière 12, et permet d'éviter d'engendrer des charges importantes sur la turbomachine 3 et d'affecter ainsi son comportement dynamique.

Bien entendu, les deuxièmes moyens de liaison peuvent être dépourvus d'une telle structure de support intermédiaire 33 et l'entrée d'air 10 et/ou la section arrière 12 de la nacelle 2 peuvent être directement fixées sur la structure de support 30.

Peuvent ainsi être distingués, notamment, les différentes catégories de modes de réalisation suivantes. Selon une première catégorie de modes de réalisation, l'entrée d'air 10 et la section arrière 12 sont reliées à la structure de support intermédiaire 33. Selon une deuxième catégorie de modes de réalisation, l'entrée d'air 10 est reliée à la structure de support intermédiaire 33 tandis que la section arrière 12 est directement reliée à la structure de support 30. Selon une troisième catégorie de modes de réalisation, la section arrière 12 est reliée à la structure de support intermédiaire 33 tandis que l'entrée d'air 10 est directement reliée à la structure de support 30. Selon une quatrième catégorie de modes de réalisation, l'entrée d'air 10 et la section arrière 12 sont directement reliée à la structure de support 30.

La structure de support intermédiaire 33 de la figure 5 peut présenter toute géométrie adaptée au support de l'entrée d'air 10 et/ou de la section arrière 12. Par exemple, la structure de support intermédiaire 33 peut former une poutre, un caisson, un berceau, une structure en treillis ou toute autre structure capable de relier l'entrée d'air 10 et/ou la section arrière 12 à la structure de support 30.

Dans un mode de réalisation, la structure de support intermédiaire 33 forme un berceau tel qu'illustré à la figure 6.

Le berceau 33 comprend des longerons 40 et des tronçons d'anneau 41, 42 et 43 reliés les uns aux autres de manière à former une structure en treillis.

Une telle structure est tout à la fois robuste et peu massive.

Dans cet exemple, le berceau 33 comprend six longerons 40 s'étendant parallèlement à la direction axiale X et étant circonférentiellement espacées les uns des autres, ainsi que six tronçons d'anneau 41, 42 et 43 espacés les uns des autres le long de la direction axiale X.

Le berceau de la figure 6 présente un plan de symétrie Z-X passant par l'axe central longitudinal A1, trois desdits longerons 40 s'étendant d'un côté de ce plan de symétrie et les trois autres longerons 40 s'étendant de l'autre côté de ce plan de symétrie.

Le berceau 33 comprend aussi une structure d'accroche 44 configurée pour coopérer avec lesdits organes de fixation 34 de manière à fixer le berceau 33 sur la structure de support 30 (voir figures 5 et 6).

Le tronçon d'anneau 41 est situé à l'une des extrémités axiales du berceau 33 et forme un cadre avant. Le tronçon d'anneau 43 est situé à l'autre extrémité axiale du berceau 33 et forme un cadre arrière. Les tronçons d'anneau 42 s'étendent axialement entre le cadre avant 41 et le cadre arrière 43.

Lorsque le berceau est fixé à la structure de support 30 de l'ensemble propulsif 1, les tronçons d'anneau 41, 42 et 43 et par suite le berceau 33 dans son ensemble s'étendent circonférentiellement autour de l'axe central longitudinal A1.

Dans cet exemple, le berceau 33 présente une dimension circonférentielle inférieure à 180°, cette dimension étant en l'occurrence définie par la dimension circonférentielle de chacun des tronçons d'anneau 41, 42 et 43.

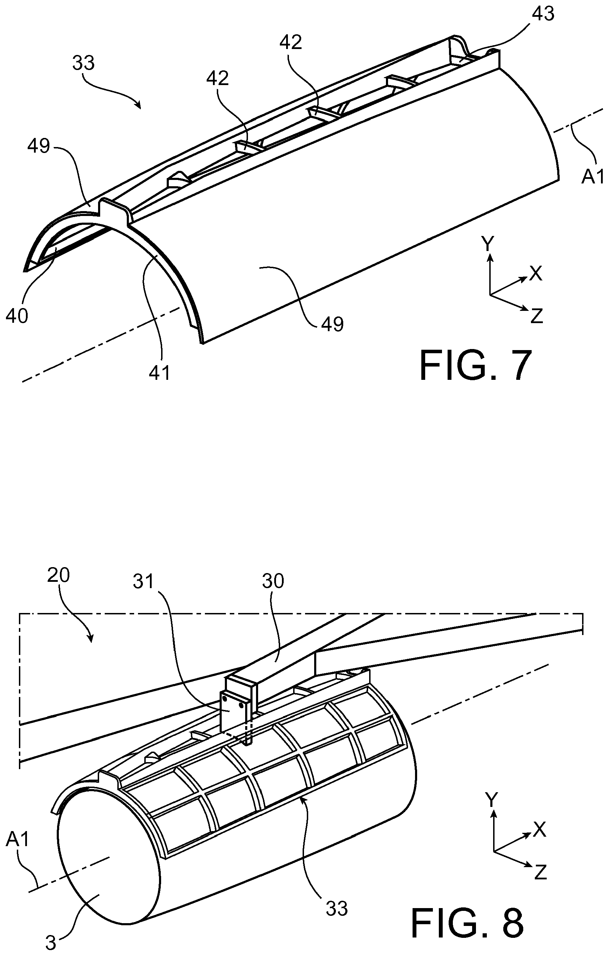

La figure 7 montre le berceau 33 partiellement recouvert de peaux externes 49 formant un carénage.

En référence aux figures 5 et 6, l'entrée d'air 10 de la nacelle 2 est dans cet exemple montée en porte-à-faux sur le berceau 33, en étant reliée au cadre avant 41 du berceau 33 par les moyens de liaison 35.

De manière similaire, la section arrière 12 de la nacelle 2 est dans cet exemple montée en porte-à-faux sur le berceau 33, en étant reliée au cadre arrière 43 du berceau 33 par les moyens de liaison 36.

Dans ce mode de réalisation, l'entrée d'air 10 et la section arrière 12 de la nacelle 2 sont en appui axial, ou susceptibles de venir en appui axial, respectivement sur le cadre avant 41 et le cadre arrière 43 du berceau 33, c'est-à-dire sur un secteur circonférentiel inférieur à 180°.

Dans d'autres modes de réalisation non représentés, le cadre avant 41 et/ou le cadre arrière 43 du berceau 33 sont annulaires de sorte que l'entrée d'air 10 et/ou la section arrière 12 soient montées sur toute leur circonférence en appui axial sur le berceau 33.

Dans cet exemple, les bras 31 de suspension de la turbomachine 3 traversent des ouvertures formées par le berceau 33 (voir figures 5, 6 et 8), c'est-à-dire des ouvertures délimitées axialement par deux tronçons d'anneau respectifs et par deux longerons respectifs du berceau 33.

Le concept consistant à faire traverser la structure de support intermédiaire 33, et plus généralement les deuxièmes moyens de liaison, par les premiers moyens de liaison 31 est aussi applicable à une structure de support intermédiaire présentant une géométrie différente de celle du berceau de la figure 6. Par exemple, dans un mode de réalisation dans lequel la structure de support intermédiaire est une poutre, des ouvertures peuvent être ménagées dans la poutre de sorte que les premiers moyens de liaison puissent s'étendre à travers ces ouvertures (non représenté).

La figure 8 montre une partie d'aéronef comportant un ensemble propulsif 1 présentant l'architecture de la figure 5 et comprenant en guise de structure de support intermédiaire 33 le berceau de la figure 6.

Plus précisément, la figure 8 montre une ossature 30 d'une aile 20 d'aéronef, le berceau 33 et la turbomachine 3 fixée à l'ossature 30 par les bras de suspension 31 (un seul bras étant visible sur cette figure). Les organes 34 de fixation du berceau 33 sur l'ossature 30 ne sont pas visibles sur la figure 8.

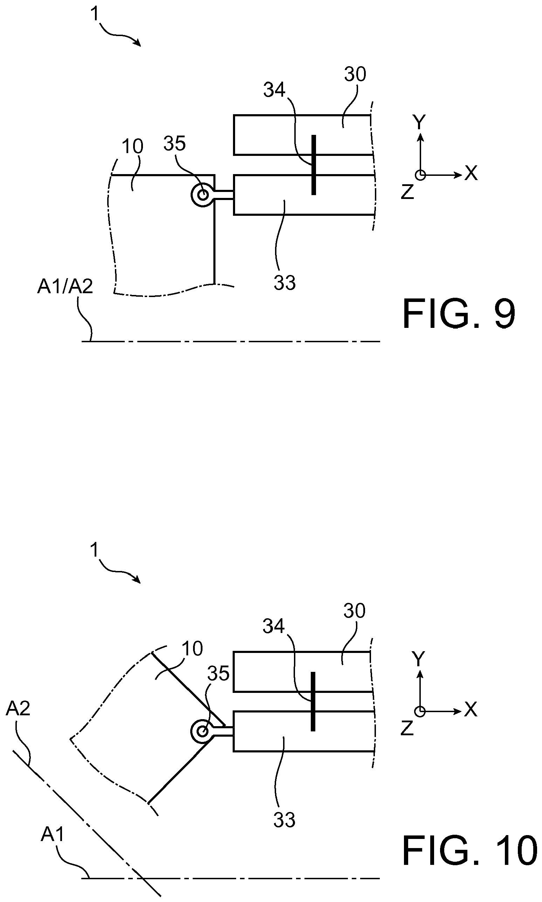

Les figures 9 et 10 illustrent un mode de réalisation dans lequel l'entrée d'air 10 est reliée à la structure de support intermédiaire 33 selon une liaison pivot permettant de déplacer l'entrée d'air entre une position de vol (figure 9) et une position de maintenance (figure 10).

En position de vol (figure 9), l'entrée d'air 10 présente un axe central A2 qui est dans cet exemple confondu avec l'axe central longitudinal A1 de l'ensemble propulsif 1. Bien entendu, ces axes A1 et A2 peuvent alternativement ne pas être confondus l'un avec l'autre, par exemple dans le cadre d'une architecture telle qu'illustrée sur la figure 4.

En position de maintenance (figure 10), l'axe central A2 de l'entrée d'air 10 et l'axe central longitudinal A1 de l'ensemble propulsif 1 sont obliques l'un par rapport à l'autre.

Le placement de l'entrée d'air 10 en position de maintenance facilite l'accès à la partie avant de la turbomachine 3, notamment dans le cadre d'une opération d'inspection et/ou de maintenance - par exemple, ponçage d'aubes de la soufflante 4, remplacement d'une sonde de pression ou de température (non représentée), équilibrage de la turbomachine 3 - et permet d'éviter pour ce faire de déposer la turbomachine 3.

Ce mode de réalisation est notamment avantageux lorsque l'ensemble propulsif 1 comprend un cône d'entrée 15 tel qu'illustré sur les figures 2 et 4 et/ou lorsque l'entrée d'air 10 est relativement longue et/ou étroite, ce qui est typiquement le cas d'un ensemble propulsif d'avion supersonique.

Pour permettre le déplacement de l'entrée d'air 10 entre la position de vol et la position de maintenance, lesdits moyens de liaison 35 représentés sur la figure 5, qui relient l'une à l'autre l'entrée d'air 10 et la structure de support intermédiaire 33, comprennent un organe d'articulation formant dans cet exemple une charnière.

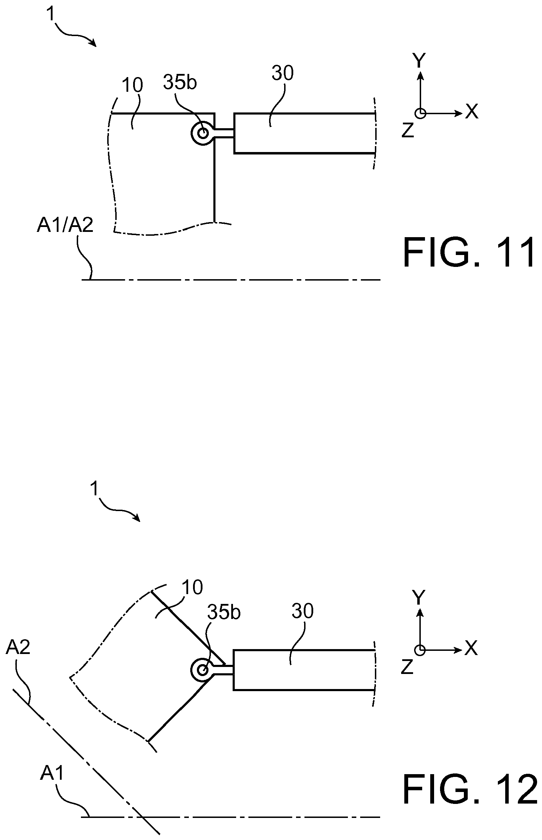

Les figures 11 et 12 montrent une variante de réalisation dans laquelle l'entrée d'air 10 est reliée par un organe d'articulation 35b à la structure de support 30, l'organe d'articulation 35b formant une partie desdits deuxièmes moyens de liaison. Autrement dit, dans cette variante de réalisation, l'entrée d'air 10 n'est pas fixée ou articulée sur une structure de support intermédiaire tel le berceau 33 de la figure 6 mais est directement reliée à la structure de support 30.

Ce qui vient d'être décrit en référence aux figures 9 et 10 s'applique par analogie aux figures 11 et 12.

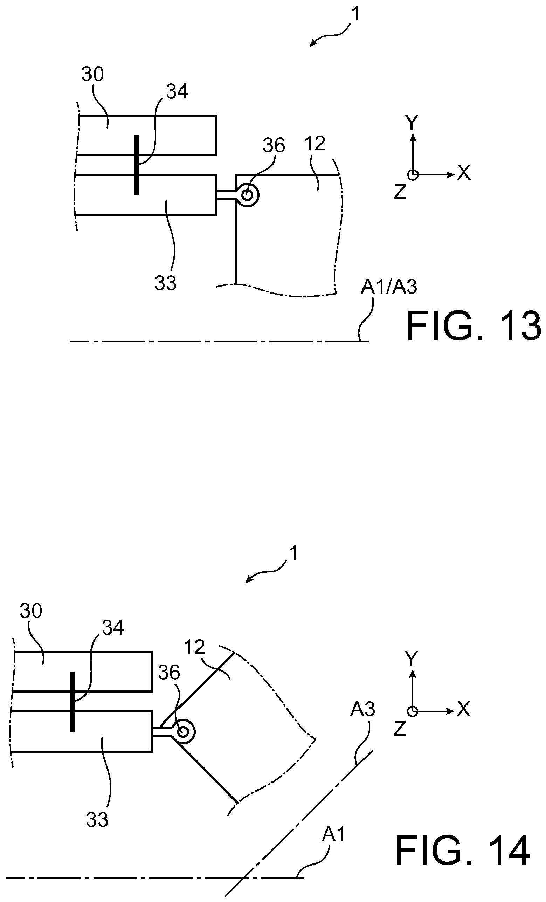

Ce qui vient d'être décrit en référence aux figures 9 à 12 concernant l'articulation de l'entrée d'air 10 peut aussi s'appliquer à la section arrière 12 (voir figures 13 à 16).

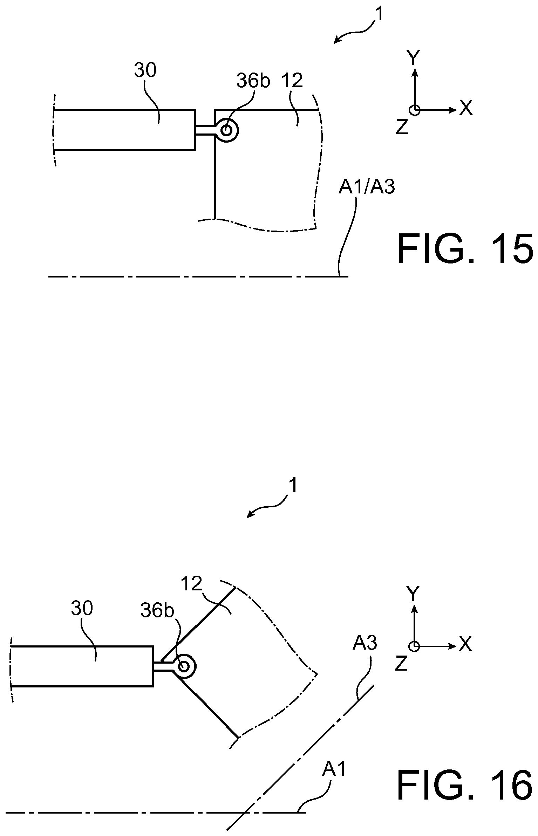

Ainsi, la section arrière 12 peut être reliée soit à la structure de support intermédiaire 33 (figures 13 et 14) soit à la structure de support 30 (figures 15 et 16) par un organe d'articulation 36 ou 36b permettant de déplacer la section arrière 12 entre une position de vol (figures 13 et 15) et une position de maintenance (figures 14 et 16).

La description des figures 9 à 12 s'applique par analogie aux figures 13 à 16, l'axe central de la section arrière 12 étant référencé A3, l'organe d'articulation 36b du mode de réalisation des figures 15 et 16 formant une partie desdits deuxièmes moyens de liaison.

Les différentes modes de réalisation qui viennent d'être décrits peuvent être combinés pour former par exemple les variantes de réalisation suivantes.

Dans un premier type de variantes de réalisation, l'ensemble propulsif 1 comprend une structure de support intermédiaire 33 reliée à la structure de support 30 de la manière illustrée sur la figure 5 (voir première, deuxième et troisième catégories de modes de réalisation décrites ci-dessus). Dans le cadre de ce premier type, l'invention couvre notamment les variantes suivantes :
- Variante n°1 : l'entrée d'air 10 et la section arrière 12 sont chacune reliées à la structure de support intermédiaire 33 par des moyens de liaison 35 ou 36, respectivement, du type moyens de fixation conventionnels ;
- Variante n°2 : l'entrée d'air 10 est articulée sur la structure de support intermédiaire 33 selon le principe illustré sur les figures 9 et 10, la section arrière 12 étant reliée à la structure de support intermédiaire 33 par des moyens de liaison 36 du type moyens de fixation conventionnels ;
- Variante n°3 : l'entrée d'air 10 est reliée à la structure de support intermédiaire 33 par des moyens de liaison 35 du type moyens de fixation conventionnels, la section arrière 12 étant articulée sur la structure de support intermédiaire 33 selon le principe illustré sur les figures 13 et 14 ;
- Variante n°4 : l'entrée d'air 10 et la section arrière 12 sont chacune articulées sur la structure de support intermédiaire 33 selon le principe illustré sur les figures 9 et 10, et sur les figures 13 et 14, respectivement ;
- Variante n°5 : l'entrée d'air 10 est reliée à la structure de support 30 par des moyens de liaison du type moyens de fixation conventionnels, la section arrière 12 étant articulée sur la structure de support intermédiaire 33 selon le principe illustré sur les figures 13 et 14 ;
- Variante n°6 : l'entrée d'air 10 est reliée à la structure de support 30 par des moyens de liaison du type moyens de fixation conventionnels, la section arrière 12 étant reliée à la structure de support intermédiaire 33 par des moyens de liaison 36 du type moyens de fixation conventionnels ;
- Variante n°7 : l'entrée d'air 10 est reliée à la structure de support intermédiaire 33 par des moyens de liaison 35 du type moyens de fixation conventionnels, la section arrière 12 étant reliée à la structure de support 30 par des moyens de liaison du type moyens de fixation conventionnels ;
- Variante n°8 : l'entrée d'air 10 est articulée sur la structure de support intermédiaire 33 selon le principe illustré sur les figures 9 et 10, la section arrière 12 étant reliée à la structure de support 30 par des moyens de liaison du type moyens de fixation conventionnels ;
- Variante n°9 : l'entrée d'air 10 est articulée sur la structure de support 30 selon le principe illustré sur les figures 11 et 12, la section arrière 12 étant reliée à la structure de support intermédiaire 33 par des moyens de liaison 36 du type moyens de fixation conventionnels ;
- Variante n°10 : l'entrée d'air 10 est articulée sur la structure de support 30 selon le principe illustré sur les figures 11 et 12, la section arrière 12 étant articulée sur la structure de support intermédiaire 33 selon le principe illustré sur les figures 13 et 14 ;
- Variante n°11 : l'entrée d'air 10 est reliée à la structure de support intermédiaire 33 par des moyens de liaison 35 du type moyens de fixation conventionnels, la section arrière 12 étant articulée sur la structure de support 30 selon le principe illustré sur les figures 15 et 16 ;
- Variante n°12 : l'entrée d'air 10 est articulée sur la structure de support intermédiaire 33 selon le principe illustré sur les figures 9 et 10, la section arrière 12 étant articulée sur la structure de support 30 selon le principe illustré sur les figures 15 et 16.

Ainsi, les variantes n°1 à 4 forment des modes de réalisation appartenant à ladite première catégorie, les variantes n°7, 8, 11 et 12 forment des modes de réalisation appartenant à ladite deuxième catégorie, et les variantes n°5, 6, 9 et 10 forment des modes de réalisation appartenant à ladite troisième catégorie.

Dans un deuxième type de variantes, formant des modes de réalisation appartenant à ladite quatrième catégorie, l'entrée d'air 10 et la section arrière 12 sont toutes deux montées sur la structure de support 30, et non sur une structure de support intermédiaire 33 telle qu'illustrée sur la figure 5. Dans le cadre de ce deuxième type, l'invention couvre notamment les variantes suivantes :
- Variante n°13 : l'entrée d'air 10 et la section arrière 12 sont chacune articulées sur la structure de support 30 selon le principe illustré sur les figures 11 et 12, et sur les figures 15 et 16, respectivement ;
- Variante n°14 : l'entrée d'air 10 est articulée sur la structure de support 30 selon le principe illustré sur les figures 11 et 12, la section arrière 12 étant reliée à la structure de support 30 par des moyens de liaison du type moyens de fixation conventionnels ;
- Variante n°15 : l'entrée d'air 10 est reliée à la structure de support 30 par des moyens de liaison du type moyens de fixation conventionnels, la section arrière 12 étant articulée sur la structure de support 30 selon le principe illustré sur les figures 15 et 16,
- Variante n°16 : l'entrée d'air 10 et la section arrière 12 sont chacune reliées à la structure de support 30 par des moyens de liaison du type moyens de fixation conventionnels.

Dans ce qui précède, lesdits moyens de fixation conventionnels sont par exemple des boulons et sont de préférence démontables.

Le principe précité d'articulation de l'entrée d'air 10 et/ou de la section arrière 12 peut être mis en oeuvre dans chacune des configurations des figures 2 à 4.

Dans l'ensemble des modes de réalisation décrits ci-dessus, l'ensemble propulsif 1 comprend de préférence un ou plusieurs joints d'étanchéité et/ou coupe-feu (non représentés) interposés d'une part entre l'entrée d'air 10 et un carter de la turbomachine 3 et/ou d'autre part entre la section arrière 12 et un carter de la turbomachine 3.

Dans des modes de réalisation dans lesquels l'entrée d'air 10 est articulée de la manière décrite ci-dessus en référence aux figures 9 à 12, un tel joint est de préférence configuré pour être comprimé lorsque l'entrée d'air 10 est déplacée de la position de maintenance vers la position de vol.

De même, dans des modes de réalisation dans lesquels la section arrière 12 est articulée de la manière décrite ci-dessus en référence aux figures 13 à 16, un tel joint est de préférence configuré pour être comprimé lorsque la section arrière 12 est déplacée de la position de maintenance vers la position de vol.

Dans les exemples qui suivent, l'entrée d'air 10 et/ou la section arrière 12 de la nacelle 2 sont maintenus en position de maintenance par une ou plusieurs bielles 50.

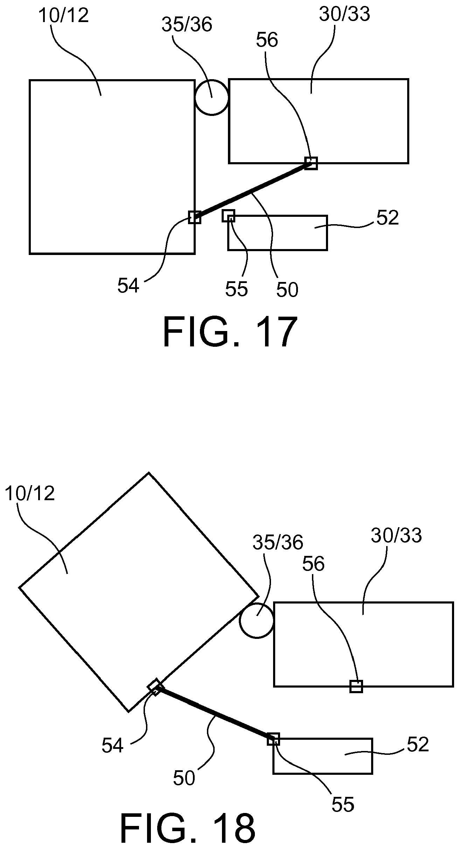

Les figures 17 et 18 montrent l'un de ces éléments de nacelle, c'est-à-dire l'entrée d'air 10 ou la section arrière 12, respectivement en position de vol et en position de maintenance.

En position de maintenance (figure 18), la bielle 50 assure une fonction de maintien de l'élément de nacelle 10 ou 12 dans cette position.

Pour ce faire, une première extrémité de la bielle 50 coopère avec l'élément de nacelle 10 ou 12 et une deuxième extrémité de la bielle 50 coopère avec une partie fixe 52 de l'ensemble propulsif 1.

En position de vol (figure 17), la bielle 50 assure une fonction de renfort structural de manière à transmettre des efforts de l'élément de nacelle 10 ou 12 à la structure de support 30 ou à la structure de support intermédiaire 33 ou, réciproquement, de la structure de support 30 ou de la structure de support intermédiaire 33 à l'élément de nacelle 10 ou 12.

Pour ce faire, la première extrémité de la bielle 50 coopère avec l'élément de nacelle 10 ou 12 et la deuxième extrémité de la bielle 50 coopère avec la structure de support 30 ou la structure de support intermédiaire 33.

Afin de permettre ce changement de position, la première extrémité de la bielle 50 est dans cet exemple reliée à l'élément de nacelle 10 ou 12 selon une liaison pivot 54.

Dans cet exemple, ladite partie fixe 52 de l'ensemble propulsif 1 comprend un premier moyen d'attache 55 et la structure de support 30 ou la structure de support intermédiaire 33 comprend un deuxième moyen d'attache 56.

Lorsque l'élément de nacelle 10 ou 12 est en position de vol (figure 17), la deuxième extrémité de la bielle 50 coopère de manière amovible avec le deuxième moyen d'attache 56.

Lorsque l'élément de nacelle 10 ou 12 est en position de maintenance (figure 18), la deuxième extrémité de la bielle 50 coopère de manière amovible avec le premier moyen d'attache 55.

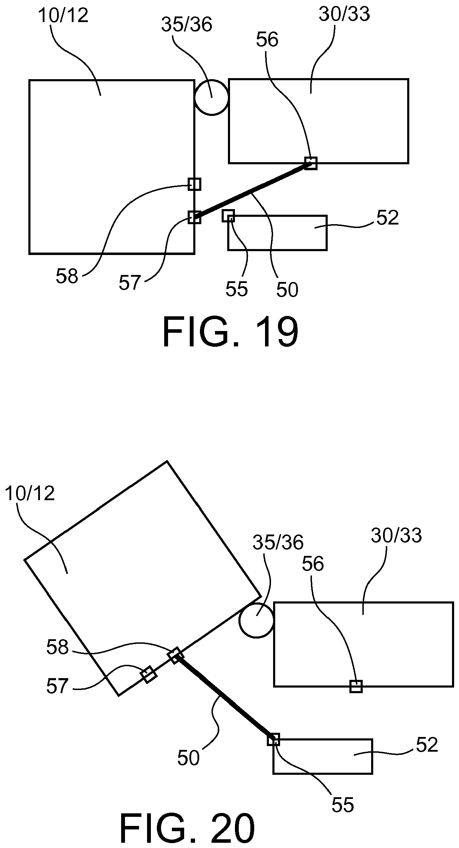

Les figures 19 et 20 illustrent une variante de réalisation qui se distingue de celle des figures 17 et 18 en ce que l'élément de nacelle 10 ou 12 comprend deux moyens d'attache 57 et 58 configurés de sorte que, lorsque l'élément de nacelle 10 ou 12 est en position de vol (figure 19), la deuxième extrémité de la bielle 50 coopère de manière amovible avec l'un de ces moyens d'attache 57 et de sorte que, lorsque l'élément de nacelle 10 ou 12 est en position de maintenance (figure 20), la deuxième extrémité de la bielle 50 coopère de manière amovible avec l'autre moyen d'attache 58.

Dans chacun de ces modes de réalisation, la bielle 50 peut être télescopique et/ou présenter une géométrie incurvée permettant par exemple d'épouser les contours de la turbomachine 3 lorsque l'élément de nacelle 10 ou 12 est en position de vol.

Pour faciliter la solidarisation/désolidarisation de la bielle 50 vis-à-vis des moyens d'attache 55, 56, 57 et/ou 58, ces derniers peuvent comprendre un mécanisme à broche à billes connu sous la dénomination anglo-saxonne « quick-release pin ».

La bielle 50 peut comprendre un détrompeur permettant à un opérateur de s'assurer que celle-ci est correctement montée en position de vol avant mise en service de l'ensemble propulsif 1.

La turbomachine 3 et/ou l'élément de nacelle 10 ou 12 peuvent comprendre un ou plusieurs pions de centrage (non représentés) permettant d'assurer un bon positionnement de l'élément de nacelle 10 ou 12 en position de vol.

Dans un mode de réalisation, ce ou ces pions de centrage sont conçus pour céder ou fondre en cas de balourd sévère ou de perte d'aube.

Dans un mode de réalisation non représenté, le déplacement de l'élément de nacelle 10 ou 12 entre la position de vol et la position de maintenance est assuré par un actionneur comprenant un ou plusieurs vérins.

Bien entendu, plusieurs bielles semblables à la bielle 50 peuvent être mises en oeuvre simultanément. Par exemple, deux bielles peuvent être utilisées par élément de nacelle 10 ou 12.

Ce qui vient d'être décrit en référence aux figures 17 à 20 s'applique soit à l'entrée d'air 10 seulement, soit à la section arrière 12 seulement, soit à la fois à l'entrée d'air 10 et à la section arrière 12, cela quelle que soit la variante de réalisation choisie parmi les combinaisons décrites ci-dessus en référence aux figures 9 à 16.

A titre d'exemple non limitatif, l'invention couvre ainsi un ensemble propulsif 1 présentant une architecture conforme à la variante n°2 décrite ci-dessus, c'est-à-dire dans laquelle l'entrée d'air 10 est articulée sur la structure de support intermédiaire 33, et comprenant deux bielles similaires à la bielle 50 des figures 19 et 20 s'étendant symétriquement de part et d'autre de la structure de support intermédiaire 33 et de part et d'autre de l'organe d'articulation 35.

## Revendications

1. Ensemble propulsif (1) pour aéronef, comprenant une nacelle (2), une structure de support (30) et des premiers moyens de liaison (31) configurés pour relier une turbomachine (3) à la structure de support (30), la nacelle (2) comprenant une entrée d'air (10) et une section arrière (12) d'éjection de gaz, tel qu'il comprend des deuxièmes moyens de liaison (33, 34, 35, 36) reliant l'entrée d'air (10) et/ou la section arrière (12) de la nacelle (2) à la structure de support (30) de sorte que la structure de support (30) puisse supporter d'une part la turbomachine (3) via les premiers moyens de liaison (31) et d'autre part l'entrée d'air (10) et/ou la section arrière (12) de la nacelle (2) via les deuxièmes moyens de liaison (33, 34, 35, 36), les deuxièmes moyens de liaison comprenant un organe d'articulation (35, 35b, 36, 36b) configuré pour autoriser un déplacement d'un élément de nacelle parmi l'entrée d'air (10) et la section arrière (12) entre :
- une position de vol, dans laquelle un axe central (A2, A3) dudit élément de nacelle (10, 12) et un axe central longitudinal (A1) de l'ensemble propulsif (1) sont confondus ou parallèles l'un par rapport à l'autre, et
- une position de maintenance, dans laquelle l'axe central (A2, A3) dudit élément de nacelle (10, 12) et l'axe central longitudinal (A1) de l'ensemble propulsif (1) sont obliques ou perpendiculaires l'un par rapport à l'autre.

2. Ensemble propulsif (1) selon la revendication 1, dans lequel les deuxièmes moyens de liaison comprennent une structure de support intermédiaire (33) fixée à la structure de support (30), l'entrée d'air (10) et/ou la section arrière (12) de la nacelle (2) étant reliées à la structure de support intermédiaire (33).

3. Ensemble propulsif (1) selon la revendication 2, dans lequel la structure de support intermédiaire (33) forme un berceau s'étendant circonférentiellement autour d'un axe central longitudinal (A1) de l'ensemble propulsif (1).

4. Ensemble propulsif (1) selon la revendication 2 ou 3, dans lequel la structure de support intermédiaire (33) comprend :
- un cadre avant (41) formant un tronçon d'anneau configuré pour y fixer l'entrée d'air (10) de la nacelle (2), et/ou
- un cadre arrière (43) formant un tronçon d'anneau configuré pour y fixer la section arrière (12) de la nacelle (2).

5. Ensemble propulsif (1) selon l'une quelconque des revendications 2 à 4, dans lequel l'entrée d'air (10) et/ou la section arrière (12) de la nacelle (2) sont montées en porte-à-faux sur la structure de support intermédiaire (33).

6. Ensemble propulsif (1) selon l'une quelconque des revendications précédentes, comprenant une ou plusieurs bielles (50) configurées pour maintenir ledit élément de nacelle (10, 12) en position de maintenance et pour transmettre des efforts de l'une à l'autre parmi l'élément de nacelle (10, 12) et la structure de support (30) lorsque l'élément de nacelle (10, 12) est en position de vol, les bielles (50) pouvant être amovibles et/ou télescopiques.

7. Ensemble propulsif (1) selon l'une quelconque des revendications 1 à 6, dans lequel les premiers moyens de liaison (31) traversent les deuxièmes moyens de liaison (33).

8. Aéronef comprenant un ensemble propulsif (1) selon l'une quelconque des revendications 1 à 7, ladite structure de support (30) formant un élément de voilure (20) ou de fuselage (21) ou d'empennage (22).

9. Aéronef selon la revendication 8, formant un avion supersonique.

## Patentansprüche

1. Antriebseinheit (1) für ein Flugzeug, die eine Gondel (2), eine Trägerstruktur (30) und erste Verbindungsmittel (31) umfasst, die dazu konfiguriert sind, eine Turbomaschine (3) mit der Trägerstruktur (30) zu verbinden, wobei die Gondel (2) einen Lufteinlass (10) und einen hinteren Gasausstoßabschnitt (12) umfasst, so dass sie zweite Verbindungsmittel (33, 34, 35, 36) umfasst, die den Lufteinlass (10) und/oder den hinteren Abschnitt (12) der Gondel (2) mit der Trägerstruktur (30) verbinden, so dass die Trägerstruktur (30) einerseits über die ersten Verbindungsmittel (31) die Turbomaschine (3) und andererseits über die zweiten Verbindungsmittel (33, 34, 35, 36) den Lufteinlass (10) und/oder den hinteren Abschnitt (12) der Gondel (2) tragen kann, wobei die zweiten Verbindungsmittel ein Gelenkelement (35, 35b, 36, 36b) umfasst, das dazu konfiguriert ist, eine Bewegung eines Gondelelements zwischen dem Lufteinlass (10) und dem hinteren Abschnitt (12) zwischen Folgendem zu ermöglichen:
- einer Flugposition, in der eine Mittelachse (A2, A3) des Gondelelements (10, 12) und eine Längsmittelachse (A1) der Antriebseinheit (1) zusammenfallen oder parallel im Verhältnis zueinander verlaufen, und
- einer Wartungsposition, in der die Mittelachse (A2, A3) des Gondelelements (10, 12) und die Längsmittelachse (A1) der Antriebseinheit (1) schräg oder senkrecht im Verhältnis zueinander sind.

2. Antriebseinheit (1) nach Anspruch 1, wobei die zweiten Verbindungsmittel eine an der Trägerstruktur (30) befestigte Zwischenträgerstruktur (33) umfassen, wobei der Lufteinlass (10) und/oder der hintere Abschnitt (12) der Gondel (2) mit der Zwischenträgerstruktur (33) verbunden sind.

3. Antriebseinheit (1) nach Anspruch 2, wobei die Zwischenträgerstruktur (33) eine Halterung bildet, die sich in Umfangsrichtung um eine Längsmittelachse (A1) der Antriebseinheit (1) erstreckt.

4. Antriebseinheit (1) nach Anspruch 2 oder 3, wobei die Zwischenträgerstruktur (33) Folgendes umfasst:
- einen vorderen Rahmen (41), der ein Ringstück bildet, das dazu konfiguriert ist, den Lufteinlass (10) der Gondel (2) daran zu befestigen, und/oder
- einen hinteren Rahmen (43), der ein Ringstück bildet, das dazu konfiguriert ist, den hinteren Abschnitt (12) der Gondel (2) daran zu befestigen.

5. Antriebseinheit (1) nach einem der Ansprüche 2 bis 4, wobei der Lufteinlass (10) und/oder der hintere Abschnitt (12) der Gondel (2) freitragend an der Zwischenträgerstruktur (33) montiert sind.

6. Antriebseinheit (1) nach einem der vorhergehenden Ansprüche, die eine oder mehrere Verbindungsstangen (50) umfasst, die dazu konfiguriert sind, das Gondelelement (10, 12) in der Wartungsposition zu halten und Kräfte zwischen dem Gondelelement (10, 12) und der Trägerstruktur (30) zu übertragen, wenn sich das Gondelelement (10, 12) in der Flugposition befindet, wobei die Verbindungsstangen (50) entfernbar und/oder teleskopisch sein können.

7. Antriebseinheit (1) nach einem der Ansprüche 1 bis 6, wobei die ersten Verbindungsmittel (31) durch die zweiten Verbindungsmittel (33) verlaufen.

8. Flugzeug, das eine Antriebseinheit (1) nach einem der Ansprüche 1 bis 7 umfasst, wobei die Trägerstruktur (30) ein Element der Tragfläche (20) oder des Rumpfs (21) oder des Leitwerks (22) bildet.

9. Flugzeug nach Anspruch 8, das ein Überschallflugzeug bildet.

## Claims

1. A propulsion unit (1) for an aircraft, comprising a nacelle (2), a support structure (30) and first connecting means (31) configured to connect a turbomachine (3) to the support structure (30), the nacelle (2) comprising an air inlet (10) and a gas ejection rear section (12), such as it comprises
second connecting means (33, 34, 35, 36) connecting the air inlet (10) and/or the rear section (12) of the nacelle (2) to the support structure (30) so that the support structure (30) could support on the one hand the turbomachine (3) via the first connecting means (31) and on the other hand the air inlet (10) and/or the rear section (12) of the nacelle (2) via the second connecting means (33, 34, 35, 36), the second connecting means comprising a hinge member (35, 35b, 36, 36b) configured to enable a movement of a nacelle element amongst the air inlet (10) and the rear section (12) between:
- a flight position, in which a central axis (A2, A3) of said nacelle element (10, 12) and a longitudinal central axis (A1) of the propulsion unit (1) are coincident with or parallel to each other, and
- a maintenance position, in which the central axis (A2, A3) of said nacelle element (10, 12) and the longitudinal central axis (A1) of the propulsion unit (1) are oblique or perpendicular to each other.

2. The propulsion unit (1) according to claim 1, wherein the second connecting means comprise an intermediate support structure (33) fastened to the support structure (30), the air inlet (10) and/or the rear section (12) of the nacelle (2) being connected to the intermediate support structure (33).

3. The propulsion unit (1) according to claim 2, wherein the intermediate support structure (33) forms a cradle extending circumferentially around a longitudinal central axis (A1) of the propulsion unit (1).

4. The propulsion unit (1) according to claim 2 or 3, wherein the intermediate support structure (33) comprises:
- a front frame (41) forming a ring section configured to fasten the air inlet (10) of the nacelle (2) thereto, and/or
- a rear frame (43) forming a ring section configured to fasten the rear section (12) of the nacelle (2) thereto.

5. The propulsion unit (1) according to any one of claims 2 to 4, wherein the air inlet (10) and/or the rear section (12) of the nacelle (2) are mounted cantilevered on the intermediate support structure (33).

6. The propulsion unit (1) according to any one of the preceding claims, comprising one or more connecting rod(s) (50) configured to hold said nacelle element (10, 12) in the maintenance position and to transmit forces from one to the other among the nacelle element (10, 12) and the support structure (30) when the nacelle element (10, 12) is in the flight position, the connecting rods (50) possibly being removable and/or telescopic.

7. The propulsion unit (1) according to any one of claims 1 to 6, wherein the first connecting means (31) pass through the second connecting means (33).

8. An aircraft comprising a propulsion unit (1) according to any one of claims 1 to 7, said support structure (30) forming a wing (20) or fuselage (21) or tail (22) element.

9. The aircraft according to claim 8, forming a supersonic airplane.
